# EUROPEAN PATENT APPLICATION

(11) **EP 4 299 672 A1**
(43) Date of publication of application: **03.01.2024**
(21) Application number: 22760053.3
(22) Date of filing: 23.02.2022
(51) Int. Cl.: C08L 69/00, C08L 67/02, C08L 51/04, C08L 23/08

(54) **THERMOPLASTIC RESIN COMPOSITION AND MOLDED ARTICLE USING SAME**

(30) Priority: 26.02.2021 KR 20210026343
(71) Applicant: Lotte Chemical Corporation, Seoul, 05551 (KR)
(72) Inventor: KIM, Myunghun, Uiwang-si, Gyeonggi-do 16073 (KR); KWON, Keehae, Uiwang-si, Gyeonggi-do 16073 (KR); HONG, Jaekeun, Uiwang-si, Gyeonggi-do 16073 (KR)
(74) Representative: Germain Maureau
(86) International application number: PCT/KR2022/002668
(87) International publication number: WO 2022/182137

(57) **Abstract**

Disclosed are a thermoplastic resin composition, and a molded article using the same, the thermoplastic resin composition including, based on 100 parts by weight of a base resin including (A) 60 to 75 wt% of a polycarbonate resin; (B) 15 to 30 wt% of a polybutylene terephthalate resin; (C) 3 to 10 wt% of a polyethylene terephthalate resin; (D) 5 to 15 wt% of a core-shell copolymer including a butadiene-based rubbery polymer core and an alkyl (meth)acrylate-based shell, (E) greater than or equal to 0.3 parts by weight and less than 1 part by weight of a polyolefin-based polymer including a glycidyl group.

## Description

### [Technical Field]

A thermoplastic resin composition and a molded article using the same are disclosed.

### [Background Art]

A polycarbonate resin is widely used as one of engineering plastics in a plastic industry.

The polycarbonate resin has a glass transition temperature (Tg) reaching about 150 °C due to a bulky molecular structure such as bisphenol-A and thus shows high heat resistance and also has flexibility and rigidity given by a carbonyl group of a carbonate group having high rotating mobility. In addition, as an amorphous polymer, it has excellent transparency and excellent impact resistance and compatibility with other resins.

However, a defect of deteriorated flowability and thus, may also be largely used as alloys with various resins in order to complement moldability and post processability.

Among the alloys, a polycarbonate/acrylonitrile-butadiene-styrene copolymer (PC/ABS) alloy has excellent durability, moldability, heat resistance, impact resistance, and the like and is applied to vast fields such as electric/electronics, an automobile, an architecture, miscellaneous consumer materials, and the like.

However, the PC/ABS alloy lacks of resistance against chemicals used for cosmetics and air fresheners used inside a vehicle and the like and thus may be damaged when applied to an automobile interior material.

Accordingly, one of the methods of enhancing the chemical resistance of the PC/ABS alloy, a method of increasing a molecular weight of a polycarbonate resin has been conventionally attempted but noticeably may deteriorate moldability, resulting in limiting a size of its applied parts.

In addition, another method of using a polycarbonate/polyester (PC/polyester) alloy to use the polycarbonate resin with a polyester resin having a high crystallization rate together has been attempted. However, the polyester resin has excellent mechanical properties, electric properties, chemical resistance, and the like and particularly, a fast crystallization rate and thus excellent moldability but a problem of a low glass transition temperature and thus low heat resistance and also, low impact resistance at room temperature and a low temperature. Accordingly, as a content of the polyester resin is increased, the heat resistance is deteriorated, which may cause phase instability between polyester and polycarbonate, resulting in a deviation in appearance and mechanical properties.

Accordingly, in order to solve the problems, development of a thermoplastic resin composition having excellent flowability, chemical resistance, impact resistance, and heat resistance is required.

### [Disclosure]

### [Technical Problem]

It is to provide a thermoplastic resin composition having improved flowability, chemical resistance, impact resistance, and heat resistance, and a molded article using the same.

### [Technical Solution]

According to an embodiment, a thermoplastic resin composition includes, based on 100 parts by weight of a base resin including (A) 60 to 75 wt% of a polycarbonate resin; (B) 15 to 30 wt% of a polybutylene terephthalate resin; (C) 3 to 10 wt% of a polyethylene terephthalate resin; (D) 5 to 15 wt% of a core-shell copolymer including a butadiene-based rubbery polymer core and an alkyl (meth)acrylate-based shell, (E) greater than or equal to 0.3 parts by weight and less than 1 part by weight of a polyolefin-based polymer including a glycidyl group.

The (A) polycarbonate resin may have a melt flow index of 1 to 15 g/10min measured at 300 °C under a load condition of 1.2 kg according to ASTM D1238.

The (B) polybutylene terephthalate resin may have an intrinsic viscosity of 0.7 to 1.5 dl/g measured according to ASTM D2857.

A weight ratio of the (B) polybutylene terephthalate resin and the (C) polyethylene terephthalate resin may be 3:1 to 5:1.

The (D) core-shell copolymer including the butadiene-based rubbery polymer core and the alkyl (meth)acrylate-based shell may be a methyl methacrylate-butadiene-styrene copolymer.

The (E) polyolefin-based polymer including the glycidyl group may include a modified polyolefin having a glycidyl group, a copolymer of an olefin and an unsaturated monomer having a glycidyl group, or a combination thereof.

The olefin may include ethylene, propylene, 1-butene, isobutylene, 2-butene, cyclobutene, 1-pentene, 1-hexene, 4-methyl-1-pentene, 1-octene, 3-methyl-1-butene, 4-methyl-1-butene, cyclopentene, 1-hexene, cyclohexene, 1-octene, 1-decene and 1-dodecene, or a combination thereof.

The unsaturated monomer having the glycidyl group may include glycidyl (meth)acrylate, vinyl glycidyl ether, allyl glycidyl ether, or a combination thereof.

The (E) polyolefin-based polymer including the glycidyl group may be an ethylene-glycidyl methacrylate copolymer.

The thermoplastic resin composition may further include at least one additive selected from a flame retardant, a nucleating agent, a coupling agent, a glass fiber, a plasticizer, a lubricant, an inorganic filler, an antibacterial agent, a release agent, a heat stabilizer, an antioxidant, a UV stabilizer, an antistatic agent, a pigment, and a dye.

Meanwhile, a molded article using the thermoplastic resin composition according to an embodiment may be provided.

### [Advantageous Effects]

The thermoplastic resin composition according to an embodiment and a molded article using the same have excellent flowability, chemical resistance, impact resistance, and heat resistance and thus may be widely applied to mold various products using them regardless of painting or non-painting and thus may be usefully applied particularly to an automobile interior material and the like.

### [Mode for Invention]

Hereinafter, embodiments of the present disclosure are described in detail. However, these embodiments are exemplary, the present disclosure is not limited thereto and the present disclosure is defined by the scope of claims.

In the present invention, unless otherwise described, the average particle diameter of the rubbery polymer refers to a volume average diameter, and refers to a Z-average particle diameter measured using a dynamic light scattering analyzer.

According to an embodiment, a thermoplastic resin composition includes, based on 100 parts by weight of a base resin including (A) 60 to 75 wt% of a polycarbonate resin; (B) polybutylene terephthalate resin 15 to 30 wt%; (C) polyethylene terephthalate resin 3 to 10 wt%; (D) 5 to 15 wt% of a core-shell copolymer including a butadiene-based rubbery polymer core and an alkyl (meth)acrylate-based shell, (E) greater than or equal to 0.3 parts by weight and less than 1 part by weight of a polyolefin-based polymer including a glycidyl group.

Hereinafter, each component of the thermoplastic resin composition is described in detail.

### (A) Polycarbonate Resin

The polycarbonate resin is a polyester having a carbonate bond, is not particularly limited, and may be any polycarbonate that is usable in a field of a resin composition.

For example, the polycarbonate resin may be prepared by reacting diphenols represented by Chemical Formula 1 with phosgene, halogenic acid ester, carbonate ester, or a combination thereof.

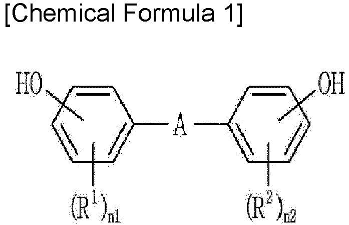

In Chemical Formula 1,
A is a linking group selected from a single bond, a substituted or unsubstituted C1 to C30 alkylene group, a substituted or unsubstituted C2 to C5 alkenylene group, a substituted or unsubstituted C2 to C5 alkylidene group, a substituted or unsubstituted C1 to C30 haloalkylene group, a substituted or unsubstituted C5 to C6 cycloalkylene group, a substituted or unsubstituted C5 to C6 cycloalkenylene group, a substituted or unsubstituted C5 to C10 cycloalkylidene group, a substituted or unsubstituted C6 to C30 arylene group, a substituted or unsubstituted C1 to C20 alkoxylene group, a halogenic acid ester group, a carbonate ester group, C=O, S, and SO₂, R¹ and R² are independently a substituted or unsubstituted C1 to C30 alkyl group or a substituted or unsubstituted C6 to C30 aryl group, and n1 and n2 are independently an integer ranging from 0 to 4.

Two or more kinds of the diphenols represented by Chemical Formula 1 may be combined to constitute a repeating unit of a polycarbonate resin.

Specific examples of the diphenols may be hydroquinone, resorcinol, 4,4'-dihydroxydiphenyl, 2,2-bis(4-hydroxyphenyl)propane (referred to as 'bisphenol-A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. Among the diphenols, 2,2-bis(4-hydroxyphenyl)propane, 2,2-bis(3-methyl-4-hydroxyphenyl)propane, 2,2-bis(3,5-dimethyl-4-hydroxyphenyl)propane, 2,2-bis(3,5-dichloro-4-hydroxyphenyl)propane, or 1,1-bis(4-hydroxyphenyl)cyclohexane may be desirably used. 2,2-bis(4-hydroxyphenyl)propane may be more desirably used.

The polycarbonate resin may be a mixture of copolymers obtained using two or more dipenols that differ from each other. In addition, the polycarbonate resin may be a linear polycarbonate resin, a branched polycarbonate resin, a polyestercarbonate copolymer resin, and the like.

Specific examples of the linear polycarbonate resin may be a bisphenol-A polycarbonate resin. Specific examples of the branched polycarbonate resin may be a polymer prepared by reacting a multi-functional aromatic compound such as trimellitic anhydride, trimellitic acid, and the like with diphenols and a carbonate. The polyestercarbonate copolymer resin may be prepared by reacting bifunctional carboxylic acid with diphenols and carbonate, wherein the used carbonate is diaryl carbonate such as diphenyl carbonate or ethylene carbonate.

The polycarbonate resin may have a weight average molecular weight of 10,000 to 200,000 g/mol, for example, 14,000 to 50,000 g/mol. When the polycarbonate resin has a weight average molecular weight within the ranges, excellent impact resistance and flowability may be obtained.

The polycarbonate resin may be included in an amount of 60 to 75 wt%, for example 60 to 70 wt% based on 100 wt% of the base resin. Within the above weight range, the thermoplastic resin composition may exhibit excellent appearance characteristics and mechanical strength.

The polycarbonate resin may have a melt flow index of 1 to 15 g/10min measured at 300 °C under a load condition of 1.2 kg according to ASTM D1238, for example 1 to 12 g/10min, for example 1 to 10 g/10min. When using a polycarbonate resin having a melt flow index within the above range, a molded article using the polycarbonate resin may exhibit excellent moldability and excellent impact resistance.

Meanwhile, the polycarbonate resin may be used by mixing two or more polycarbonate resins having different weight average molecular weight or melt flow index. By mixing and using polycarbonate resins having different weight average molecular weights or melt flow indices, it is easy to adjust the thermoplastic resin composition to have desired flowability.

### (B) Polybutylene Terephthalate Resin

The polybutylene terephthalate resin is in general obtained through a polycondensation reaction of terephthalic acid or a derivative thereof with 1,4-butanediol or a derivative thereof but through a copolymerization of dicarboxylic acid, glycol, or the like, unless the purpose of the present disclosure is damaged.

Herein, examples of the copolymerizable dicarboxylic acid may be isophthalic acid, 2-chloro terephthalic acid, 2,5-dichloroterephthalic acid, 2-methylterephthalic acid, 4,4-stilbenedicarboxylic acid, 4,4-biphenyldicarboxylic acid, orthophthalic acid, 2,6-naphthalene dicarboxylic acid, bisbenzoic acid, bis(p-carboxylphenyl) methane, anthracene dicarbonic acid, 4,4-diphenyletherdicarboxylic acid, 4,4-diphenoxyethanedicarbonic acid, adipic acid, sebacic acid, azelaic acid, dodecane diacid, 1,3-cyclohexanedicarboxylic acid, 1,4-cyclohexanedicarboxylic acid, and the like. The copolymerizable dicarboxylic acid may be for example exemplified and examples thereof may be used alone or as a mixture of two or more.

On the other hand, the copolymerizable glycol may be ethylene glycol, 1,2-propylene glycol, 1,3-propanediol, 2,2-dimethyl-1,3-propanediol, trans-2,2,4,4,-tetramethyl-1,3-cyclobutane diol, cis-2,2,4,4,-tetramethyl-1,3-cyclobutane diol, neopentylglycol, 1,5-pentanediol, 1,6-hexanediol, 1,4-cyclohexanedimethanol, 1,3-cyclohexanedimethanol, decamethylene glycol, cyclohexane diol, p-xylene diol, bisphenol A, tetrabromo bisphenol A, tetrabromo bisphenol A-bis (2-hydroxyethylether), and the like. The copolymerizable glycol may be for example exemplified and examples thereof may be used alone or as a mixture of two or more.

In addition, the polybutylene terephthalate resin may have an intrinsic viscosity of 0.7 to 1.5 dl/g measured according to ASTM D2857 in order to sufficiently secure impact resistance of a molded article formed by using the thermoplastic resin composition.

The polybutylene terephthalate resin according to an embodiment may be included in an amount of 15 to 30 wt%, for example 15 to 25 wt% based on 100 wt% of the base resin. When the polybutylene terephthalate resin is included within the ranges, the thermoplastic resin composition may have excellent chemical resistance.

### (C) Polyethylene Terephthalate Resin

The polyethylene terephthalate resin may include a resin obtained by polycondensation of terephthalic acid or a derivative thereof and ethylene glycol or a derivative thereof, and may include polyethylene terephthalate (PET), glycol modified polyethylene terephthalate (PETG), polytetramethylene glycol (PTMG), polypropylene glycol (PPG), a copolymer of aliphatic polyesters or aliphatic polyamides with polyethylene terephthalate (PET) and a combination thereof.

In addition, the polyethylene terephthalate resin may be a recycled polyethylene terephthalate resin regenerated from waste polyethylene terephthalate resin. Herein, the waste polyethylene terephthalate resin means a polyethylene terephthalate resin that has been previously used, such as a waste PET bottle, and may be a waste polyethylene terephthalate resin that has been used one or more times.

The polyethylene terephthalate resin may have an intrinsic viscosity of 0.7 to 1.5 dl/g measured according to ASTM D2857 in order to sufficiently secure impact resistance of a molded article using the thermoplastic resin composition.

The polyethylene terephthalate resin according to an embodiment may be included in 3 to 10 wt%, for example 5 to 8 wt% based on 100 wt% of the base resin. When the polyethylene terephthalate resin is included within the above range, the thermoplastic resin composition has excellent heat resistance and impact resistance.

In an embodiment, the polyethylene terephthalate resin is used together with the polybutylene terephthalate resin, and at this time, a weight ratio of the (B) polybutylene terephthalate resin and (C) polyethylene terephthalate resin may be 3:1 to 5:1. Within the above weight ratio range, physical properties that may be degraded by the polybutylene terephthalate resin may be supplemented, and thus heat resistance and flowability of the thermoplastic resin composition and molded articles using the same may be improved.

### (D) Core-shell Copolymer Including Butadiene-based Rubbery Polymer Core and Alkyl (Meth)acrylate-based Shell

In an embodiment, the thermoplastic resin composition may include a core-shell copolymer including a butadiene-based rubbery polymer core and an alkyl (meth)acrylate-based shell to improve impact resistance and appearance characteristics.

The core-shell copolymer including the butadiene-based rubbery polymer core and the alkyl (meth)acrylate-based shell is a graft copolymer having a core-shell structure in which the alkyl (meth)acrylate-based monomer is grafted to the butadiene-based rubbery polymer core formed in one or more layers to form a shell having one or more layers.

In an embodiment, the core-shell copolymer including the butadiene-based rubbery polymer core and the alkyl (meth)acrylate-based shell may be prepared by adding alkyl (meth)acrylate-based monomers such as methyl methacrylate to the butadiene-based rubbery polymer core and graft-copolymerizing to form a shell through a conventional polymerization method such as emulsion polymerization, suspension polymerization, or bulk polymerization.

In addition, the core-shell copolymer including the butadiene-based rubbery polymer core and the alkyl (meth)acrylate-based shell may be a graft copolymer formed by graft-copolymerizing an aromatic vinyl-based monomer such as styrene to the butadiene-based rubbery polymer core to form a primary shell and then graft copolymerizing an alkyl (meth)acrylate-based monomer such as methyl methacrylate to form a secondary shell.

The butadiene-based rubbery polymer may be selected from a butadiene rubbery polymer, a butadiene-styrene rubbery polymer, a butadiene-acrylonitrile rubbery polymer, a butadiene-acrylate rubbery polymer, and a mixture thereof.

The butadiene-based rubbery polymer core may be included in an amount of 40 to 80 wt% based on 100 wt% of the core-shell copolymer including the butadiene-based rubbery polymer core and the alkyl (meth)acrylate-based shell.

In addition, an average particle diameter of the butadiene-based rubbery polymer may be 100 to 400 nm, for example, 120 to 380 nm.

In an embodiment, the core-shell copolymer including the butadiene-based rubbery polymer core and the alkyl (meth)acrylate-based shell may be a methyl methacrylate-butadiene-styrene copolymer.

The core-shell copolymer including the butadiene-based rubbery polymer core and the alkyl (meth)acrylate-based shell may be included in an amount of 5 to 15 wt%, for example 5 to 12 wt%, based on 100% by weight of the base resin. Within the above weight range, the thermoplastic resin composition may have excellent impact resistance and appearance characteristics.

### (E) Polyolefin-based Polymer Including Glycidyl Group

In an embodiment, the thermoplastic resin composition includes the (E) polyolefin-based polymer including the glycidyl group and may exhibit excellent impact resistance at room temperature and in a high temperature/high humidity environment.

The polyolefin-based polymer including the glycidyl group may include, for example a modified polyolefin having a glycidyl group, a copolymer of an olefin and an unsaturated monomer having a glycidyl group, or a combination thereof. The copolymer may be a graft copolymer, a random copolymer, or a block copolymer.

In an embodiment, the olefin may include ethylene, propylene, 1-butene, isobutylene, 2-butene, cyclobutene, 1-pentene, 1-hexene, 4-methyl-1-pentene, 1-octene, 3-methyl-1-butene, 4-methyl-1-butene, cyclopentene, 1-hexene, cyclohexene, 1-octene, 1-decene and 1-dodecene, or a combination thereof.

In one embodiment, examples of the unsaturated monomer having the glycidyl group include glycidyl (meth)acrylate, vinyl glycidyl ether, allyl glycidyl ether, or a combination thereof.

For example, the polyolefin-based polymer including the glycidyl group may be an ethylene-glycidyl methacrylate copolymer.

In an embodiment, the polyolefin-based polymer including the glycidyl group may include 1 to 5 wt%, for example 1 to 4 wt% of the glycidyl group based on 100 wt%.

The polyolefin-based polymer including the glycidyl group may be included in an amount of greater than or equal to 0.3 parts by weight and less than 1 part by weight based on 100 parts by weight of the base resin. If the polyolefin-based polymer including the glycidyl group is less than 0.3 parts by weight, the thermoplastic resin composition including the same and molded articles using the same lack impact resistance in room temperature and high temperature/high humidity environments, and if it is greater than or equal to 1 part by weight, gloss of the thermoplastic resin composition including the same and molded articles using the same may decrease.

### (F) Other Additives

In addition to the components (A) to (E), in the thermoplastic resin composition according to an embodiment, one or more necessary additives may be further included in order to balance each physical property under the condition of maintaining excellent flowability, chemical resistance, impact resistance, and heat resistance, or depending on the end use of the thermoplastic resin composition.

Specifically, the additives may be flame retardants, nucleating agents, coupling agents, glass fibers, plasticizers, lubricants, inorganic fillers, antibacterial agents, release agents, heat stabilizers, antioxidants, UV stabilizers, antistatic agents, pigments, dyes, etc., and these may be used alone or in combination of two or more.

These additives may be appropriately included within a range that does not impair the physical properties of the thermoplastic resin composition, and specifically, may be included in an amount of less than or equal to 20 parts by weight based on 100 parts by weight of the base resin, but are not limited thereto.

The thermoplastic resin composition according to the present invention may be prepared in a well-known method of preparing a thermoplastic resin composition.

For example, the thermoplastic resin composition according to the present invention may be manufactured into a pellet form by mixing components and other additives and melt-kneading the same in an extruder.

A molded article according to an embodiment of the present invention may be manufactured from the aforementioned thermoplastic resin composition.

The thermoplastic resin composition has excellent chemical resistance, heat resistance, and impact resistance and also excellent flowability and thus may be unlimitedly applied to a molded article requiring resistance against a chemical and specifically used as an automobile interior material requiring resistance against a chemical such as cosmetics and air fresheners.

Hereinafter, the present invention is illustrated in more detail with reference to examples and comparative examples. However, the following examples and comparative examples are provided for the purpose of descriptions and the present invention is not limited thereto.

Hereinafter, preferable examples of the present disclosure are described. These examples, however, are not in any sense to be interpreted as limiting the scope of the invention.

### Examples 1 to 3 and Comparative Examples 1 to 5

The thermoplastic resin compositions according to Examples 1 to 3 and Comparative Examples 1 to 5 were respectively prepared according to a content ratio of components shown in Table 1.

The components shown in Table 1 were dry-mixed, continuously added quantitively into a feed section of a twin-screw extruder (L/D = 29, diameter = 45 mm), and melted/kneaded. At this time, the barrel temperature of the twin screw extruder was set to about 250 °C. Subsequently, the pelletized thermoplastic resin compositions obtained through the twin-screw extruder were dried at about 80 °C for about 2 hours, and were injection-molded into specimens for evaluating physical properties and specimens (ASTM D638 Type I specimen) for evaluating chemical resistance using a 6 oz injection molding machine having a cylinder temperature at about 260 °C and a mold temperature at about 60 °C.

In Table 1, (A), (B), (C), and (D) represent wt% of each component based on 100 wt% of a base resin, and (E) represents a part by weight based on 100 parts by weight of the base resin ((A)+(B)+(C)+(D)).

**(Table 1)**

| | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| (A) | 70 | 67 | 62 | 70 | 70 | 73 | 65 | 75 |
| (B) | 15 | 20 | 25 | 15 | 15 | 16 | 26 | 5 |
| (C) | 5 | 5 | 5 | 5 | 5 | 2 | - | 10 |
| (D) | 10 | 8 | 8 | 10 | 10 | 9 | 9 | 10 |
| (E) | 0.7 | 0.4 | 0.9 | 0.1 | 1.5 | 0.7 | 0.7 | 0.7 |

Each component in Table 1 is described as follows.
(A) Polycarbonate Resin
   Polycarbonate resin with a melt flow index of about 6 g/10min measured at 300 °C and 1.2 kg load condition according to ASTM D1238 (Lotte Chemical Corporation)
(B) Polybutylene Terephthalate Resin
   Polybutylene terephthalate resin (Shinkong Synthetic Fibers Corp.) with an intrinsic viscosity of about 1.2 dl/g measured according to ASTM D2857
(C) Polyethylene Terephthalate Resin
   Polyethylene terephthalate resin having an intrinsic viscosity of about 1.2 dl/g measured according to ASTM D2857 (Lotte Chemical Corporation)
(D) Core-shell Copolymer Including Butadiene-based Rubbery Polymer Core and Alkyl (meth)acrylate-based Shell
   Methyl methacrylate-butadiene-styrene graft copolymer having core-shell structure (Mitsubishi Chemical Corp.) in which an average particle diameter of a butadiene-based rubbery polymer is about 370 nm
(E) Polyolefin-based Polymer Including Glycidyl group
   Ethylene-glycidyl methacrylate copolymer having a glycidyl-methacrylate content of about 4.5 wt% (Arkema)

### Experimental Examples

Experimental results are shown in Table 2.
(1) Flowability (unit: g/10 min): A melt flow index (MI) was measured under a load of 2.16 kg at 250 °C according to ASTM D1238.
(2) Heat resistance (unit: °C): A heat deflection temperature (HDT) was measured under a load of 1.8 MPa according to ASTM D648.
(3) Impact resistance (unit: kgf·cm/cm): After leaving 1/4"-thick specimens for 168 hours at room temperature (23 °C) and under high temperature/high humidity (85 °C /85% RH) conditions, the notched Izod impact strength was measured according to ASTM D256.
(4) Gloss (unit: GU): Gloss was measured under the condition of a reflection angle of 60 ° according to ASTM D523.
(5) Chemical resistance (unit: grade): ASTM D638 Type I specimens with a thickness of 3.2 mm were installed on a jig having a critical strain of 2.1%, coated with automotive air freshener (Bullsone Co., Ltd.) on the surfaces of the specimens, and left at room temperature for 168 hours, and then appearances of the specimens were evaluated.

The specific evaluation criteria are as follows.

Based on the optical microscope images, on the surface of a specimen, a crack with a maximum length of 10 µm or less was evaluated as Grade 1, a crack with a maximum length of 10 to 20 µm was evaluated as Grade 2, a crack with a maximum length of 20 to 30 µm was evaluated as Grade 3, when a crack with a maximum length of 30 to 40 µm was evaluated as Grade 4, and a crack with a maximum length of 40 µm or more was evaluated as Grade 5.

**(Table 2)**

| | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| Melt flow index | 3.8 | 4.2 | 4.5 | 4.0 | 3.4 | 3.9 | 4.1 | 3.3 |
| Heat deflection temperature | 111 | 109 | 107 | 112 | 108 | 103 | 95 | 113 |
| Izod impact strength (23 °C) | 60 | 60 | 60 | 55 | 64 | 60 | 62 | 65 |
| Izod impact strength (85 °C/85% RH, 168 hrs) | 52 | 48 | 50 | 40 | 55 | 52 | 50 | 52 |
| Gloss (60°) | 100 | 101 | 100 | 101 | 80 | 100 | 100 | 100 |
| Chemical resistance | 3 | 2 | 1 | 3 | 3 | 2 | 1 | 5 |

Referring to Tables 1 and 2, a polycarbonate resin, a polybutylene terephthalate resin, a polyethylene terephthalate resin, a core-shell copolymer including a butadiene-based rubbery polymer core and an alkyl (meth)acrylate-based shell, and a polyolefin-based polymer including a glycidyl group were used in each optimal content, realizing a thermoplastic resin composition with excellent flowability, heat resistance, and impact resistance at room temperature and under a high temperature/high humidity environment and excellent chemical resistance of Grade 3 or higher and molded article using the same.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A thermoplastic resin composition, comprising
based on 100 parts by weight of a base resin including
(A) 60 to 75 wt% of a polycarbonate resin;
(B) 15 to 30 wt% of a polybutylene terephthalate resin;
(C) 3 to 10 wt% of a polyethylene terephthalate resin; and
(D) 5 to 15 wt% of a core-shell copolymer including a butadiene-based rubbery polymer core and an alkyl (meth)acrylate-based shell,
(E) greater than or equal to 0.3 parts by weight and less than 1 part by weight of a polyolefin-based polymer including a glycidyl group.

2. The thermoplastic resin composition of claim 1, wherein
the (A) polycarbonate resin has a melt flow index of 1 to 15 g/10min measured at 300 °C under a load condition of 1.2 kg according to ASTM D1238.

3. The thermoplastic resin composition of claim 1 or claim 2, wherein
the (B) polybutylene terephthalate resin has an intrinsic viscosity of 0.7 to 1.5 dl/g measured according to ASTM D2857.

4. The thermoplastic resin composition of any one of claim 1 to claim 3, wherein
a weight ratio of the (B) polybutylene terephthalate resin and the (C) polyethylene terephthalate resin is 3:1 to 5:1.

5. The thermoplastic resin composition of any one of claim 1 to claim 4, wherein
the (D) core-shell copolymer including the butadiene-based rubbery polymer core and the alkyl (meth)acrylate-based shell is a methyl methacrylate-butadiene-styrene copolymer.

6. The thermoplastic resin composition of any one of claim 1 to claim 5, wherein
the (E) polyolefin-based polymer including the glycidyl group includes
a modified polyolefin having a glycidyl group, a copolymer of an olefin and an unsaturated monomer having a glycidyl group, or a combination thereof.

7. The thermoplastic resin composition of claim 6, wherein
the olefin includes ethylene, propylene, 1-butene, isobutylene, 2-butene, cyclobutene, 1-pentene, 1-hexene, 4-methyl-1-pentene, 1-octene, 3-methyl-1-butene, 4-methyl-1-butene, cyclopentene, 1-hexene, cyclohexene, 1-octene, 1-decene and 1-dodecene, or a combination thereof.

8. The thermoplastic resin composition of claim 6 or claim 7, wherein
the unsaturated monomer having the glycidyl group includes glycidyl (meth)acrylate, vinyl glycidyl ether, allyl glycidyl ether, or a combination thereof.

9. The thermoplastic resin composition of any one of claim 6 to claim 8, wherein
the (E) polyolefin-based polymer including the glycidyl group is an ethylene-glycidyl methacrylate copolymer.

10. The thermoplastic resin composition of any one of claim 1 to claim 9, wherein
at least one additive selected from a flame retardant, a nucleating agent, a coupling agent, a glass fiber, a plasticizer, a lubricant, an inorganic filler, an antibacterial agent, a release agent, a heat stabilizer, an antioxidant, a UV stabilizer, an antistatic agent, a pigment, and a dye is further included.

11. A molded article manufactured using the thermoplastic resin composition of any one of claim 1 to claim 10.
